# EUROPÄISCHE PATENTSCHRIFT

(11) **EP 1 920 171 B1**
(45) Veröffentlichungstag und Bekanntmachung des Hinweises auf die Patenterteilung: **16.05.2012**
(21) Anmeldenummer: 06805272.9
(22) Anmeldetag: 31.08.2006
(51) Int. Cl.: F16H 15/42, F16H 55/32, F16H 61/664, F16H 57/04, F16H 63/30

(54) **REIBKEGELGETRIEBE, BZW. STUFENLOS EINSTELLBARES GETRIEBE SOWIE VERFAHREN ZUM BETREIBEN BZW. EINSTELLEN EINES STUFENLOS EINSTELLBAREN GETRIEBES**
FRICTION CONE-TYPE OR INFINITELY VARIABLE TRANSMISSION, AND METHOD FOR THE OPERATION OR ADJUSTMENT OF AN INFINITELY VARIABLE TRANSMISSION
TRANSMISSION A CONES DE FRICTION OU A REGLAGE CONTINU ET PROCEDE POUR FAIRE FONCTIONNER OU POUR REGLER UNE TRANSMISSION A REGLAGE CONTINU

(30) Priorität: 31.08.2005 DE 102005041434; 31.08.2005 DE 102005041435; 21.02.2006 DE 102006008347; 28.02.2006 DE 102006009545; 28.02.2006 DE 102006009544
(43) Veröffentlichungstag der Anmeldung: 14.05.2008
(73) Patentinhaber: Rohs, Ulrich,, 52351 Düren (DE)
(72) Erfinder: Rohs, Ulrich,, 52351 Düren (DE)
(74) Vertreter: Reuther, Martin
(86) Internationale Anmeldenummer: PCT/DE2006/001514
(87) Internationale Veröffentlichungsnummer: WO 2007/025522

(56) Entgegenhaltungen:
- EP-A- 0 980 993
- EP-A2- 0 984 206
- DE-B- 1 232 428
- GB-A- 2 331 561
- JP-A- 60 164 068
- US-A- 3 608 385
- US-A1- 2002 000 345

## Beschreibung

Die Erfindung betrifft ein Reibkegelgetriebe mit einem Gehäuse, mit Hauptgetriebegliedern, welche einen ersten Reibkegel, einen zweiten Reibkegel und einen Reibkörper umfassen, und mit Nebengetriebegliedern, bei welchem die beiden Reibkegel mittels des Reibkörpers miteinander korrespondieren und um einen fixen Abstand voneinander beabstandet angeordnet sind und bei welchem der Reibkörper in dem Abstand verlagerbar angeordnet ist.

Derartige Reibkegelgetriebe sind aus dem Stand der Technik vielfältig bekannt. Beispielsweise ist aus der WO 2004/031620 A2 ein Getriebe bekannt, bei welchem ein Reibring zwischen zwei Reibkegeln einen Kontakt herstellt und der Reibring in einem Abstand entlang der beiden Reibkegel verlagerbar ist, so dass das Getriebe stufenlos in seiner Übersetzung einstellbar ist. Zum Verstellen des Reibringes verfügt das Getriebe über einen zwei Führungsachsen aufweisenden Käfig, der am Gehäuse des Reibkegelgetriebes um eine Drehachse verdrehbar ist. An den zwei Führungsachsen ist translatorisch verlagerbar eine Verstellbrücke gelagert. Mittels der Verstellbrücke ist der Reibring in dem Abstand zwischen den Reibkegeln verlagerbar geführt. Bei derartigen Reibkegelgetrieben gibt es in der Regel insbesondere Reibkörper, die als Reibringe ausgebildet sind, wobei der Reibring einen der Reibkegel umgreift und dabei mit einer inneren Lauffläche mit diesem umgriffenen Reibkegel in Kontakt tritt. Der andere Reibkegel tritt mit der äußeren Lauffläche des Reibringes in Kontakt. Somit sind mittels des Reibringes beide Reibkegel kraftschlüssig miteinander verbunden.

Ein gattungsbildendes Reibkegelgetriebe offenbart die DE 1 232 428 B, bei welcher ein Reibring zwei Reibkegel außen umgibt und die beiden Reibkegel auseinander gepresst werden, um auf diese Weise einen Kraftschluss zu erzeugen. Durch Düsen, die gemeinsam mit dem Reibring verlagerbar sind, wird Kühlflüssigkeit an die Kontaktstellen zwischen Reibring und Reibkegel gebracht.

Es ist Aufgabe vorliegender Erfindung ein Fluid, insbesondere ein Traktionsfluid, zumindest an kritischen Bereichen der Hauptgetriebeglieder eines Reibkegelgetriebes effektiver und damit verbessert bereit zu stellen.

Die Aufgabe der Erfindung wird von einem Reibkegelgetriebe mit den Merkmalen des Anspruchs 1 gelöst.

Mit dem Begriff "Hauptgetriebeglieder" sind vorliegend die Bauteile "erster Reibkegel" und "zweiter Reibkegel" sowie der diese beiden Reibkegel wirkverbindende "Reibkörper" erfasst. Vorliegend ergeben diese drei Bauteile die Hauptgetriebeglieder des Reibkegelgetriebes, da diese primär für die Übersetzungsverhältnisse im Reibkegelgetriebe verantwortlich sind und hierüber Drehmoment übertragen wird.

Im vorliegenden Sinne versteht man unter dem Begriff "Reibkörper" jegliche Einrichtung, die zum einen zwischen den beiden Reibkegeln einen Wirkkontakt herstellt und zum anderen in dem Abstand, der zwischen den beiden Reibkegeln existiert, verlagerbar ist.

Der Begriff "Gehäuse" beschreibt in vorliegendem Zusammenhang ein Bauteil, in welchem insbesondere die Hauptgetriebeglieder gelagert sind, so dass die entsprechende Baugruppe somit abstrakt auch als Gestell des vorliegenden Reibkegelgetriebes bezeichnet werden kann.

Demzufolge erfasst der Begriff "Nebengetriebeglieder" weitere, dem Reibkegelgetriebe zuzuordnende Bauteile, welche mit dem zuvor genannten Begriffen "Hauptgetriebeglieder" und "Gehäuse" nicht erfasst sind.

Dadurch, dass die Nebengetriebeglieder eine Fluidmitteizufuhr für die Hauptgetriebeglieder umfassen, besteht die Möglichkeit, dass zumindest in Teilbereichen die Hauptgetriebeglieder, insbesondere an kritischen Stellen der Hauptgetriebeglieder, wesentlich effektiver und besser mit einem Fluidmittel, wie etwa einem Traktionsfluid, benetzt werden.

Hierdurch werden Wirkeigenschaften zwischen den miteinander kommunizierenden Hauptgetriebegliedern wesentlich verbessert. Beispielsweise zählen zu diesen Wirkeigenschaften das Übertragen von Kräften bzw. Drehmomenten von einem ersten Hauptgetriebeglied auf ein weiteres Hauptgetriebeglied.

Der Begriff "Abstand" beschreibt vorliegend die konstante Lücke zwischen den beiden Reibkegeln, welche auf Grund der Lage der beiden Reibkegel zueinander zustande kommt und in welcher der Reibkörper zumindest teilweise angeordnet ist. Vorliegend ist dieser Abstand fix, da die beiden Reibkegel fest zueinander fixiert angeordnet sind.

Unter dem Begriff "passive Fluidmittelzufuhr" versteht man vorliegend jegliche Fluidmittelzufuhr, die unbewegbar in dem Reibkegelgetriebe angeordnet ist, also die selbst keine Relativbewegung gegenüber weiteren Getriebegliedern ausführt.

In einer ersten Ausführungsvariante, ist es möglich, dass das Gehäuse eine Fluidmittelzufuhr aufweist. Insbesondere bei Gehäusen, welche aus einer Gusslegierung oder einer Spritzgusslegierung hergestellt sind, ist es unproblematisch, bereits während des Gießprozesses die Fluidmittelzufuhr in das Gehäuse einzubinden.

Es ist vorteilhaft, wenn eine Fluidmittelzufuhr unmittelbar gehäusefest an dem Reibkegelgetriebe angeordnet ist. Es versteht sind, dass eine Fluidmittelzufuhr auch als zusätzliches Bauteil an dem Gehäuse befestigt werden kann. Beispielsweise handelt es sich bei einer derartigen Fluidmittelzufuhr um ein einfaches Blech, welches auf Grund seiner Gestalt einem Hauptgetriebeglied ein Fluidmittel zuführt.

Der Begriff "stehende Fluidmittelzufuhr" beschreibt eine Fluidmittelzufuhr, die weder im Gehäuse des Reibkegelgetriebes integriert noch am Gehäuse des Reibkegelgetriebes unmittelbar befestigt ist, wie dies beispielsweise bei einer gehäusefesten Fluidmittelzufuhr der Fall ist. Die stehende Fluidmittelzufuhr ist vorliegend vielmehr an einem Bauteil und/oder einer Bauteilgruppe befestigt, welche von dem Reibkegelgetriebegehäuse verschieden ist.

Der Begriff "aktive Fluidmittelzufuhr" beschreibt jegliche Einrichtungen, die in der Lage sind, ein Fluidmittel aktiv an ein Hauptgetriebeglied heranzuführen. Dies bedeutet, dass ein Fluidmittel nicht nur "passiv" umgelenkt wird, wie dies bei den vorstehend beschriebenen Fluidmittelzufuhren der Fall ist, sondern dass das Fluidmittel mittels einer aktiven Bewegung der Fluidmittelzufuhr auch aktiv beschleunigt wird. Hierbei spielt es keine Rolle, ob diese aktive Fluidmittelzufuhr in einem Reibkegelgetriebegehäuse, gehäusefest an einem Reibkegelgetriebegehäuse oder verlagerbar in einem Reibkegelgetriebegehäuse angeordnet ist.

Es hat sich als vorteilhaft erwiesen, wenn die aktive Fluidmittelzufuhr rotierbar gelagert ist. Hierdurch ist baulich besonders einfach eine an sich drehbare und damit aktive Fluidmittelzufuhr realisiert.

Um eine aktive Fluidmittelzufuhr baulich besonders einfach anzutreiben, ist es vorteilhaft, wenn die rotierbar gelagerte Fluidmittelzufuhr von dem Reibkörper antreibbar gelagert ist. Hierbei dient der Reibkörper des Reibringgetriebes als Antrieb für die aktive Fluidmittelzufuhr.

Insbesondere in diesem Zusammenhang ist es vorteilhaft, wenn eine rotierbar gelagerte Fluidmittelzufuhr einen Grundkörper umfasst, der eine Reibkörperlauffläche aufweist. An dieser Reibkörperlauffläche steht die rotierbar gelagerte Fluidmittelzufuhr mit dem Reibkörper, wie beispielsweise mit einem Reibring des Reibkegelgetriebes, in Verbindung. Somit dreht sich die rotierbar gelagerte Fluidmittelzufuhr und fördert dabei Fluidmittel, sobald der Reibring rotiert.

Um mehr Fluidmittel wie üblich an ein Hauptgetriebeglied zu fördern, ist es vorteilhaft, wenn eine rotierbar gelagerte Fluidmittelzufuhr Fluidmittelbeschleuniger aufweist.

Derartige Fluidmittelbeschleuniger können vielfältig ausgeformt sein, solange sie nur dazu geeignet sind, Fluidmittel zusätzlich zu beschleunigen.

Die Fluidmittelbeschleunigung wird weiter verbessert, wenn eine rotierbar gelagerte Fluidmittelzufuhr an einer Führungseinrichtung des Reibkörpers, insbesondere an einer Verstellbrücke und/oder an einem Käfig, gelagert ist. Eine derart gelagerte aktive Fluidmittelzufuhr kann somit ähnlich wie eine stehende Fluidmittelzufuhr einer Verlagerung eines Hauptgetriebegliedes folgen.

Des Weiteren ist es vorteilhaft, wenn eine rotierbar gelagerte Fluidmittelzufuhr in unmittelbarer Nähe zu einer stehenden Fluidmittelzufuhr angeordnet ist, insbesondere in Rotationsrichtung der Reibkörpers gesehen vor einer Umlenkeinrichtung für Fluidmittel. Hierdurch gelingt es, mittels einer rotierbar gelagerten Fluidmittelzufuhr beschleunigtes Fluidmittel zusätzlich beispielsweise gegen eine Umlenkeinrichtung, die eine stehende Fluidmittelzufuhr verkörpert, zu beschleunigen.

Um das Fluidmittel insbesondere an kritische Bereiche der Hauptgetriebeglieder zu führen, ist es vorteilhaft, wenn eine Fluidmittelzufuhr in Rotationsrichtung eines Hauptgetriebegliedes gesehen vor einem Fluidmittelspalt angeordnet ist. Zumindest bei rotierenden Hauptgetriebegliedern ist zwischen dem ersten Reibkegel und dem Reibkörper ein erster Fluidmittelspalt und zwischen dem zweiten Reibkegel und dem Reibkörper ein zweiter Fluidmittelspalt vorhanden. Insbesondere ein Zuführen von Fluidmittel in diese Fluidmittelspalte ist vorteilhaft, da dieses kritische Stellen an Hauptgetriebegliedern in einem Reibkegelgetriebe darstellen.

Damit auch Fluidmittel, welche aus einem derartigen Fluidmittelspalt wieder heraus gelangen, vorteilhaft innerhalb des Reibkegelgetriebes umgeleitet bzw. zu einen weiteren Fluidmittelspalt weitergeleitet werden, ist es vorteilhaft, wenn eine Fluidmittelzufuhr in Rotationsrichtung eines Hauptgetriebegliedes gesehen hinter einem Fluidmittelspalt angeordnet ist. Insbesondere kann hierdurch die Kühlung der Hauptgetriebeglieder verbessert werden.

Um Fluidmittel vermehrt besonders gezielt in einen kritischen Bereich führen zu können, ist es vorteilhaft, wenn die Fluidmittelzufuhr, insbesondere eine Mantelfläche der Fluidmittelzufuhr, bis in ein Raumvolumen hineinreicht, welches von den Grenzen der beiden Reibkegel gebildet und zwischen den beiden Reibkegeln angeordnet ist.

Gerade in diesem Raumvolumen ist eine gezielte Versorgung mit Fluidmittel besonders wichtig. Jedoch existieren diesbezügliche Fluidmittelzufuhren bislang nicht.

Es hat sich als vorteilhaft erwiesen, wenn eine Fluidmittelzufuhr wenigstens eine Umlenkeinrichtung aufweiset, mit welcher das Fluidmittel bis an ein Hauptgetriebeglied geleitet wird. Durch derart bis vorzugsweise an ein Hauptgetriebeglied ausgebildete Umlenkeinrichtungen wird Fluidmittel vorteilhaft in kritischen Bereichen, wie einem Fluidmittelspalt, an einem Hauptgetriebeglied zur Verfügung gestellt.

Insbesondere hinsichtlich in dem Reibkegelgetriebe verlagerbare Hauptgetriebeglieder, ist es vorteilhaft, wenn die Fluidmittelzufuhr wenigstens eine Umlenkeinrichtung aufweist, welche gemeinsam mit dem Reibkörper und gegenüber dem Reibkegel verlagerbar ist.

Um ein ausreichend großes Volumen an Fluidmittel über die Fluidmittelzufuhrleitung an Fluidmittelstrahldüsen bereit zu stellen, ist es vorteilhaft, wenn zwischen Fluidmittelstrahldüsen und einem Einsaugbereich einer Fluidmittelzufuhrleitung eine Fluidmittelfördereinrichtung angeordnet ist.

Um einen Antrieb der Fluidmittelfördereinrichtung baulich besonders einfach an dem Reibkegelgetriebe zu gewährleisten, ist es vorteilhaft, wenn die Fluidmittelfördereinrichtung von einem Hauptgetriebeglied antreibbar ist.

Um Fluidmittel insbesondere in kritische Bereiche der Hauptgetriebeglieder ausreichend fördern zu können, ist es vorteilhaft, wenn das Reibkegelgetriebe eine Hülleinrichtung aufweist, die sich mehr als zwei Drittel der Reibkegellänge entlang des Reibkegels erstreckt. Mit der Bezeichnung "entlang des Reibkegels" ist eine Richtung parallel zur Rotationsachse des jeweiligen Kegels beschrieben.

Weitere Ziele, Eigenschaften und Vorteile vorliegender Erfindung werden nachfolgender Zeichnunger erläutert.

Es zeigt
- Figur 1: schematisch eine Aufsicht einer ersten Führungseinrichtung aus Stahl mit einer seitlichen Führungsachse und mit einer Verstellbrücke, in welcher ein Reibring verlagerbar gelagert ist,
- Figur 2: schematisch eine Seitenansicht der Führungseinrichtung aus der Figur 1,
- Figur 3: schematisch eine Ansicht einer weiteren Führungseinrichtung aus Stahl mit einer Führungsachse und mit einer Verstellbrücke, bei welcher die Führungsachse im unteren Bereich der Führungseinrichtung vorgesehen ist,
- Figur 4: schematisch eine Ansicht einer weiteren Führungseinrichtung aus Stahl mit einer Verstellbrücke, in deren unterem Bereich Fluidumlenkmittel vorgesehen sind,
- Figur 5: schematisch eine Seitenansicht einer Führungseinrichtung aus Stahl mit zwei seitlichen Führungsachsen und einer Verstellbrücke,
- Figur 6: schematisch eine Aufsicht der Führungseinrichtung aus der Figur 5,
- Figur 7: schematisch einen Detailausschnitt von Hauptgetriebegliedern eines Reibkegelgetriebes in einem Querschnitt
- Figur 8: schematisch einen Querschnitt einer Anordnung von Hauptgetriebegliedern eines Reibkegelgetriebes mit einer vor einem Fluidspalt wirksamen Fluidmittelzufuhr,
- Figur 9: schematisch einen Querschnitt einer weiteren Anordnung von Hauptgetriebegliedern eines Reibkegelgetriebes mit einer vor einem Fluidspalt wirksamen Fluidmittelzufuhr und mit einer hinter einem Fluidspalt wirksamen Fluidmittelzufuhr,
- Figur 10: schematisch eine Seitenansicht eines Reibringes mit zwei von dem Reibring antreibbar gelagerten aktiven Fluidmittelzufuhren,
- Figur 11: schematisch eine Seitenansicht eines weiten Reibringes mit zwei von dem Reibring angetriebenen aktiven Fluidmittelzufuhren, welche jeweils an einer stehenden Fluidmittelzufuhr rotierbar gelagert sind,
- Figur 12: schematisch eine perspektivische Ansicht von weiteren Hauptgetriebegliedern eines Reibkegelgetriebes mit Fluidmittelstrahldüsen,
- Figur 13: schematisch einen Längsschnitt eines Ausgangskegels mit einer Hülleinrichtung,
- Figur 14: schematisch einen Querschnitt einer weiteren Anordnung von Hauptgetriebegliedern eines Reibkegelgetriebes mit einer hinter einem Fluidspalt wirksamen Fluidmittelzufuhr,
- Figur 15: schematisch einen Querschnitt einer weiteren Anordnung von Hauptgetriebegliedern eines Reibkegelgetriebes ähnlich Figur 14 mit einer Hülleinrichtung am Eingangskegel,
- Figur 16: schematisch einen Querschnitt einer weiteren Anordnung von Hauptgetriebegliedern eines Reibkegelgetriebes ähnlich den Figuren 14 und 15 mit einer hinter einem Fluidspalt wirksamen Fluidmittelzufuhr und mit der Hülleinrichtung am Eingangskegel,

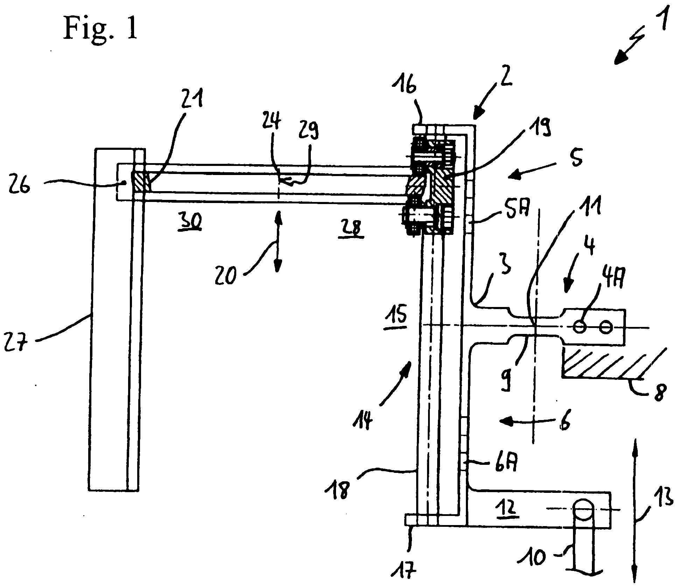

Die in der Figur 1 gezeigte Führungseinrichtung 1 eines Reibringgetriebes umfasst insbesondere einen Käfig 2, der vorliegend im Wesentlichen als Blechkörper 3 aus Stahl ausgebildet ist.

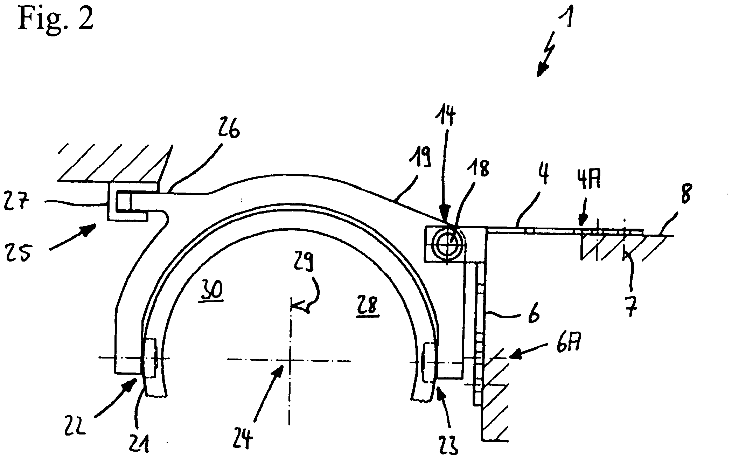

Um jedoch den Käfig elastisch zu lagern, ist der Konstruktion dieses Blechkörpers 3 teilweise so gewählt, dass der Käfig 2 eine erste elastische Lagereinrichtung 4, eine zweite elastische Lagereinrichtung 5 und eine dritte elastische Lagereinrichtung 6 aufweist. An jeder seiner elastischen Lagereinrichtungen 4, 5 und 6 sind Bohrungen 4A, 5A bzw. 6A (hier nur exemplarisch beziffert) vorgesehen, sodass der Käfig 2 über Schraubverbindungen 7 (nur exemplarisch hinsichtlich der Figur 2 gezeigt) an einem Reibringgetriebegehäuse 8 angeschraubt werden kann. Vorliegend weist zumindest die erste elastische Lagereinrichtung 4 eine Querschnittsverjüngung 9 auf, sodass der Käfig 2 mittels eines Anstellhebels 10 in der Papierebene der Figur 1 um eine Schwenkachse 11 geschwenkt werden kann. Hierzu ist der Anstellhebel 10 mittels eines Anstellhebelaufnahmeblechs 12 gelenkig an dem Käfig 2 gelagert. Der Anstellhebel 10 wird in diesem Ausführungsbeispiel zum Schwenken des Käfigs 2 gemäß des Doppelpfeils 13 translatorisch hin und her bewegt.

Abgesehen von den konstruktiv gezielt elastisch ausgebildeten Lagereinrichtungen 4, 5, 6 ist der Blechkäfig 2 aus Stahl jedoch besonders steif und fest konstruiert. So ist der Käfig 2 in kritischen Bereichen, in welchen eine hohe Steifigkeit und Festigkeit gefordert sind, besonders stabil ausgebildet. Diese hohe Steifigkeit und Festigkeit verkürzt vorteilhafter Weise die Verstellzeiten der vorliegenden Führungseinrichtung 1 ganz entscheidend.

Darüber hinaus weist die Führungseinrichtung 1 bzw. der Käfig 2 eine weitere Baugruppe 14 aus Stahl auf, welche in einem U-förmig gebogenen Bereich 15 des Käfigs 2 zwischen einem ersten Schenkel 16 des Blechkörpers 3 und einem zweiten Schenkel 17 des Blechkörpers 3 angeordnet ist. Die weitere Bauteilgruppe 14 umfasst vorliegend im Wesentlichen eine zylindrische Führungsachse 18, an welcher eine Verstellbrücke 19 gemäß der Richtungen des Doppelpfeils 20 frei verfahren werden kann. Die axiale Führungsachse 18 stellt vorliegend auf baulich besonders einfache Art und Weise eine einseitige und besonders steife Axialführung der Verstellbrücke 19 innerhalb des Käfigs 2 dar. Durch die Verstellbrücke 19 aus Stahl erfährt die Führungseinrichtung 1 eine weitere Erhöhung der Steifigkeit.

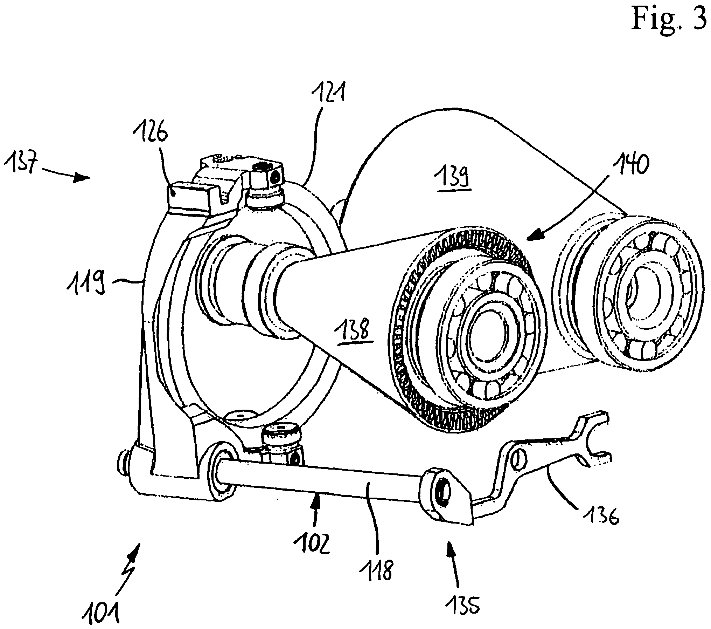

An der Verstellbrücke 19 wird ein Reibring 21, der eine Verbindung zwischen zwei in Figuren 3, 5 und 6 näher gezeigten Wälzkörpern in an sich bekannter Weise herstellt, mittels eines ersten Rollenhalters 22 und eines zweiten Rollenhalters 23 drehbar gelagert. Der erste Rollenhalter 22 stellt eine erste Lagerstelle dar. Dementsprechend stellt der zweite Rollenhalter 23 eine zweite Lagerstelle dar. Vorliegend ist der Reibring 21 ebenfalls aus Stahl hergestellt. Damit sind der Reibring 21 sowie wesentliche Bauteilgruppen der Verstellbrücke 19 und des Käfigs 2, wie die brückenartige Bauteilgruppe der Verstellbrücke 19 und die axiale Führungsachse 18, aus einem identischen Werkstoff hergestellt.

Es versteht sich, dass weitere Bauteilgruppen wenigstens einer Baugruppe nicht zwingend aus Stahl hergestellt sein müssen. Je nach geforderten Anforderungen an die Baugruppe, wie etwa an die Verstellbrücke 19, können weitere Bauteilgruppen dieser Baugruppe, wie beispielsweise die Rollen oder die Lagen, jedoch auch aus einem von Stahl abweichenden Werkstoff hergestellt sein. Selbiges gilt beispielsweise für die Bauteilgruppen des Käfigs 2, wie beispielsweise die Blechkonstruktion 3, die Lagereinrichtungen oder die Führungsachse 18.

In der Darstellung nach Figur 2 ist eine erste Reibringachse 24 schematisch dargestellt. Um zu unterbinden, dass die Verstellbrücke 19 um die zylindrische Führungsachse 18 rotiert, weist die Verstellbrücke 19 eine Drehsicherung 25 auf. Die Drehsicherung 25 besteht in diesem Ausführungsbeispiel aus einem Drehsicherungszapfen 26, der ein Bestandteil der Verstellbrücke 19 ist. Darüber hinaus weist die Drehsicherung 25 eine Laufschiene 27 auf, in welcher der Drehsicherungszapfen 26 gemäß den Richtungen des Doppelpfeils 20 hin und her gleiten kann. Die Laufschiene 27 der Drehsicherung 25 ist am Reibbringgetriebegehäuse 8 befestigt, sodass von der Drehsicherung 25 problemlos auch größere Kräfte aufgenommen und in das Reibringgetriebegehäuse 8 geleitet werden können und diese als Bestandteil des Käfigs 2 definiert werden kann.

In diesem Ausführungsbeispiel ist die Drehsicherung 25 gegenüberliegend der axialen Führungsachse 18 vorgesehen, wobei die axiale Führungsachse 18 im Bereich einer ersten Flächenseite 28 einer durch die beiden Wälzkörperachsen aufgespannten Fläche 29 angeordnet ist, während die Drehsicherung 25 auf einer zweiten Flächenseite 30 der Fläche 29 angeordnet ist. Die Verstellbrücke 19 ist somit axial lediglich an einer einzigen Flächenseite 28 bezüglich der durch die Wälzkörperachsen (hier nur die erste Wälzkörperachse 24 des ersten Wälzkörpers dargestellt) vorgegebenen Fläche 29 gelagert.

Die Fläche 29 ist mittels und entlang der beiden Wälzkörperachsen gebildet. Die hier zu Grunde liegende Fläche 29 und damit auch die durch die Fläche 29 beschriebene Ebene verläuft nach den Darstellungen der Figuren 1 und 2 rechtwinkelig zu der Papierebene. Die Fläche 29 kann auch die Papierebene unter einem spitzen Winkel schneiden.

Die in der Figur 3 gezeigte weitere Führungseinrichtung 101 umfasst ebenfalls eine Verstellbrücke 119 aus Stahl, welche an einer stählernen zylindrischen Führungsachse 118 translatorisch bewegbar gelagert ist. Die zylindrische Führungsachse 118 ist über ein Lager 135 drehbeweglich an einem Hebel 136 gelagert. Insofern gibt der Hebel 136 die Bewegung vor und kann sehr genau mit lediglich einem rotatorischen Freiheitsgrad gelagert werden, während die Lagerung der Führungsachse 118 für den entsprechenden Ausgleich sorgt.

An der zylindrischen Führungsachse 118 gegenüberliegenden Seite 137 der Verstellbrücke 119 ist ein Drehsicherungszapfen 126 angeordnet, so dass ein Drehen der Verstellbrücke 119 um die zylindrische Führungsachse 118 in nicht ordnungsgemäßer Weise unterbunden ist.

Mit der Verstellbrücke 119 ist ein Reibring 121 drehbar um einen ersten Reibkegel 138 gelagert. Darüber hinaus kommuniziert der erste Reibkegel 138 mittels des Reibrings 121 mit einem zweiten Reibkegel 139 in an sich bekannter Weise.

Die hier gezeigte Führungseinrichtung 101 zeichnet sich ebenfalls durch eine besonders steife Konstruktion aus, da sowohl die zylindrische Führungsachse 118 als auch die Verstellbrücke 119 besonders stabile und steife Bauteile darstellen. Somit werden mit dieser Konstruktion ebenfalls sehr kurze Reaktionszeiten beim Einstellen des Reibringes 121 erzielt.

Die zylindrische Führungsachse 118 stellt in diesem Beispiel einen besonders einfach konstruierten Käfig 102 der Führungseinrichtung 101 dar.

Vorliegend haben die beiden Reibkegel 138 und 139, wie in der Zeichnung ersichtlich, einen fix vorgegebenen Abstand 140 zueinander, wobei sich der Reibring 121 mit Hilfe der Verstellbrücke 119 im Abstand 140 zwischen den beiden Reibkegeln 138 und 139 sicher verlagern kann. Somit ist eine stufenlos wählbare Getriebeübersetzung auf baulich besonders einfache Art und Weise gegeben.

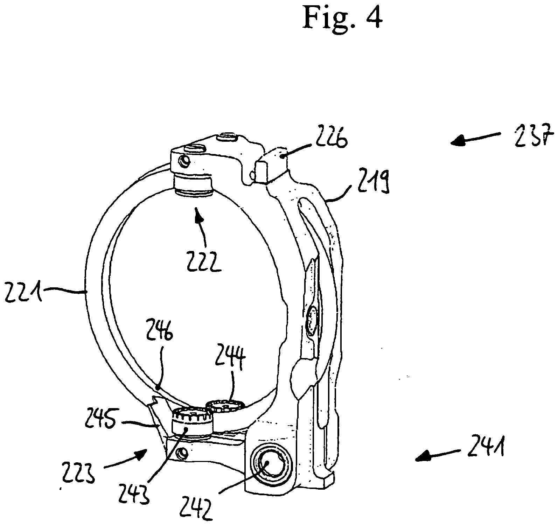

Eine weitere Verstellbrücke 219 aus Stahl illustriert Figur 4, wobei die Verstellbrücke 219 in ihrem unteren Bereich 241 ein Führungsachsenauge 242 zum Aufnehmen einer Führungsachse (ähnlich wie in Figur 3 aber in Figur 4 nicht dargestellt) aufweist. Im oberen Bereich 237 weist die Verstellbrücke 219 einen Drehsicherungszapfen 226 auf. An der Verstellbrücke 219 ist ein Reibring 221 gelagert. Hierzu weist die Verstellbrücke 219 im oberen Bereich 237 einen ersten Rollenhalter 222 auf. Dementsprechend befindet sich im unteren Bereich 241 der Verstellbrücke 219 ein zweiter Rollenhalter 223.

In diesem Ausführungsbeispiel weisen die beiden Rollen 243 und 244 des Rollenhalters 223 an ihren Kopfseiten Profilierungen auf, die dazu geeignet sind, ein Fluid, wie beispielsweise ein Transmissionsfluid, auf zu wirbeln. Durch dieses Aufwirbeln ist es möglich, das Fluid in einen Kontaktspalt zwischen dem Reibring 221 und einem hier nicht näher gezeigten Reibkegel zu befördern bzw. eine betriebssichere Benetzung in diesem Kontaktspalt sicher zu stellen.

Um diesen Effekt noch weiter zu verstärken, ist vor dem Rollenhalter 223 eine Umlenkeinrichtung 245 für das Fluid an der Verstellbrücke 219 vorgesehen. Mit der Umlenkeinrichtung 245 wird insbesondere mittels der profilierten Rollen 243, 244 aufgewirbeltes Fluid gezielter an eine Kontaktstelle 246, an welcher der Reibring 221 mit einem Reibkegel wechselwirkt, geleitet.

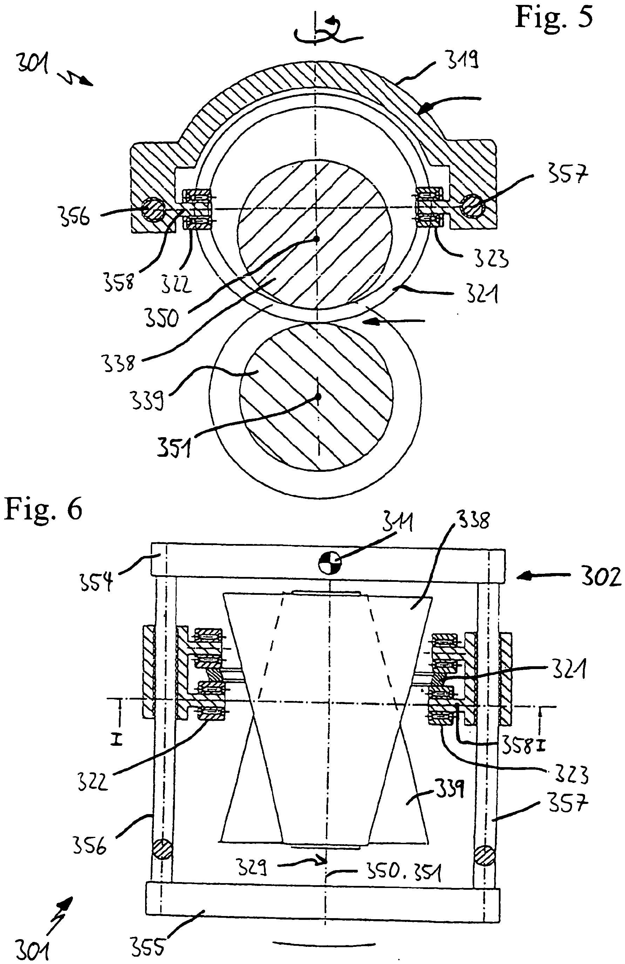

Die in den Figuren 5 und 6 dargestellte Führungseinrichtung 301 besteht im Wesentlichen aus einer Verstellbrücke 319 aus Stahl und einem Käfig 302 aus Stahl. An der Verstellbrücke 319 ist ein Reibring 312 gelagert, welcher zwei auf parallelen Wälzkörperachsen 350 und 351 mit radialem Abstand 340 angeordneten Reibkegel 338 und 339 wirkverbindet. Die Reibkegel 338 und 339 sind zueinander gegensinnig angeordnet und haben gleiche Kegelwinkel β. Zwischen den Reibkegeln 338 und 339 ist also der den radialen Abstand 340 überbrückender Reibring 321 angeordnet, der den ersten Reibkegel 338 umgibt und in dem Käfig 302 gehalten ist.

Der Käfig 302 besteht aus einem Rahmen, der von zwei Querhäuptern 354 und 355 und zwei darin aufgenommenen parallelen Führungsachsen 356 und 357 gebildet ist. Diese Führungsachsen 356, 357 sind parallel zu den Kegelreibradachsen 350 und 351 angeordnet und tragen die Verstellbrücke 319 mit zwei aufeinander zuweisenden Zapfen 358 (hier nur exemplarisch beziffert), auf denen ein erster Rollenhalter 322 bzw. ein zweiter Rollenhalter 323 sitzen. Die Rollenhalter 322 und 323 greifen beiderseits des Reibringes 321 an und geben diesem die notwendige axiale Führung.

Die Mitte des Querhauptes 354 bildet eine lotrechte Schwenkachse 311, um die der gesamte Käfig 302 schwenkbar ist.

Die Schwenkachse 311 liegt bei diesem Ausführungsbeispiel in der durch die Reibkegelradachsen 350 und 351 der Reibkegel 338 und 339 bestimmten Fläche 329, die eine Ebene darstellt. Die Fläche 329 kann auch in einer hierzu parallelen Ebene liegen oder die erste Fläche 329 unter einem spitzen Winkel schneiden.

Wird der Käfig 302 um wenige Winkelgrade verschwenkt, so wird der Reibantrieb eine axiale Verstellung der Verstellbrücke 319 und damit eine Änderung des Übersetzungsverhältnisses der Reibkegel 338 und 339. Hierzu genügt ein winziger Energieaufwand.

In einem weiteren nicht gezeigten Ausführungsbeispiel kann auch ein Frontantrieb für ein Fahrzeug ein Kegelreibringgetriebe aufweisen. Der Frontantrieb besteht im Wesentlichen aus einem hydraulischen Wandler bzw. einer Flüssigkeitskupplung, einem dieser nachgeordneten Schalteinheit, dem Kegelreibringgetriebe und einem Abtrieb.

Der Antriebsteil der Flüssigkeitskupplung sitzt auf einer Welle, auf der auch eine Bremsscheibe angeordnet ist, die mit dem Kegelreibringgehäuse gehaltenen Bremsbacken zusammen wirkt und elektronisch ansteuerbar ist. Unmittelbar hinter der Bremsscheibe sitzt ein freilaufendes Zahnrad, das mit einem nur teilweise dargestellten Vorgelege in Eingriff steht und im Abtrieb den Rückwärtsgang bewirken kann. Das Zahnrad weist auf einer Seite eine Kronenverzahnung auf, mit der es mit einer auf der Welle gehaltenen und axial verschiebbaren, eine innere Axialverzahnung aufeisenden Schaltmuffe in Eingriff gebracht und aktiviert werden kann.

Wird eine Drehrichtungsumkehr gewünscht, so wird zunächst eine Bremse bestehend aus Bremsscheibe und Bremsbacken betätigt, damit das nachfolgende Getriebe nicht von dem Drehmomentstoß beeinträchtigt wird. Sodann wird die Schaltmuffe aus ihrer neutralen Stellung nach rechts bewegt und gelangt mit einem Ritzel in Eingriff, welches fest mit der Antriebswelle des Kegelreibrades des Kegelreibringgetriebes verbunden ist.

Das Kegelreibringgetriebe besteht, wie auch anhand der Figuren 5 und 6 beschrieben, aus zwei entgegengesetzt und mit radialem Abstand 340 zueinander angeordneten Kegelreibrädern 338 und 339 mit gleichem Kegelwinkel und parallelen Achsen. Ferner ist das erste Kegelreibrad 338 von dem Reibring 321 umschlossen, der mit seiner inneren Mantelfläche mit dem zweiten Kegelreibrad 339 und mit seiner äußeren Mantelfläche mit dem ersten Kegelreibrad 338 in Reibeingriff steht.

Die beiden Kegelreibräder können, wie dargestellt, unterschiedliche Durchmesser haben, wodurch gegebenenfalls eine Übersetzungsstufe beim nachfolgenden Antrieb eingespart wird. Aus Gewichtsgründen können die Kegelreibräder auch hohl ausgebildet sein, da es im Wesentlichen lediglich auf ihre Mantelfläche ankommt.

Der Reibring 321 ist in einem Käfig 302 gehalten, der an der Stelle im Reibringgetriebegehäuse 208 um eine Schwenkachse 311 schwenkbar angeordnet ist, die in der durch die Kegelreibradachsen 350 bzw. 351 der Kegelreibräder 338 bzw. 339 bestimmten Ebene 329 liegt. Um große Schwenkwege zu vermeiden, liegt sie etwa in der Mitte der axialen Länge der Kegelreibräder 338, 339. Die Schwenkachse 311 kann, wie oben erwähnt, auch in einer hierzu parallelen Ebene liegen und die erstgenannte Ebene 329 unter einem spitzen Winkel schneiden.

Im Käfig 302 sind zwei parallele Führungsachsen 356 und 357 gehalten, deren Steigungswinkel β zur Waagerechten gleich dem Kegelwinkel β der Kegelreibräder 338 und 339 ist. Auf diesen Führungsachsen 356 und 357 ist eine Verstellbrücke 319 geführt, die Ansätze aufweist, an denen Rollenhalter 322 bzw. Rollenhalter 323 gelagert sind.

Der Reibring 321 kann mit seiner Achse parallel zu den Kegelreibradachsen 350, 351 der Kegelreibräder 338 und 339 angeordnet sein. Er kann aber auch so im Käfig 302 gehalten sein, dass seine Achse parallel zur Erzeugenden der aneinander zugewandten Kegelreibräder 338, 339 liegt und senkrecht auf der Mantelfläche der Kegelreibräder 338, 339 steht.

Für die Verstellung des Käfigs 302 ist eine im Gehäuse 208 gelagerte Verstellspindel vorgesehen, die mit einem Verstellmotor oder Magneten verbunden ist und am Käfig 302 angreift.

Bei leichter Drehung des Käfigs 302 wird der Reibring 321 um die Schwenkachse 311 gedreht, wodurch sich die relative Lage zu den Kegelreibrädern 338 und 339 verändert, sodass der Reibring 321 selbsttätig seine Position verfährt und das Übersetzungsverhältnis des Kegelreibringgetriebes verändert.

Die Abtriebswelle des Kegelreibrades 339 ist in einer Anpresseinrichtung 4134 aufgenommen, die ihrerseits im Gehäuse 208 gelagert ist, und trägt Abtriebsritzel.

Die Anpresseinrichtung 4134 besteht aus einer die Abtriebswelle 4130 übergreifenden Verlängerungswelle mit einem dem Kegelreibrad 339 zugewandten Flansch mit einer Radialverzahnung, die mit einer entsprechenden Radialverzahnung am Kegelreibrad 339 zusammenwirkt. Die Radialverzahnung bewirkt einen axialen Druck auf das Kegelreibrad 339.

Vorteilhaft ist das Reibringgetriebegehäuse 208 zwischen dem An- und Abtrieb einerseits und dem Kegelreibringgetriebe andererseits durch eine Trennwand abgeteilt. Damit ist es möglich, im Gehäuseteil für das Reibringgetriebe eine Kühlflüssigkeit ohne Schmiereigenschaften, zum Beispiel Silikonöl, einlaufen zu lassen, sodass der Reibwert nicht beeinflusst wird. Als Kühlflüssigkeit für das Reibringgetriebe eignen sich auch Traktionsfluide oder Öle mit Keramikpulver oder anderen Feststoffpartikeln.

Vorteilhaft bestehen die Reibflächen mindestens eines Getriebeteiles des Reibringgetriebes, zum Beispiel die Kegelreibräder 338, 339 oder der Reibring 321 aus einer Beschichtung aus Hartmetall oder Keramik, zum Beispiel Titannitrid, Titankarbonnitrid, Titanaluminiumnitrid oder dergleichen.

Auch bei diesem Ausführungsbeispiel sind sowohl der Käfig 302 als auch die Verstellbrücke 319 des Reibkegelgetriebes aus Stahl hergestellt. Hierdurch sind beide Bauteilgruppen 302, 319 wesentlich steifer ausgebildet als bisher üblich, so dass diese sich bei einer Kräfteeinleitung wesentlich weniger verwinden. Somit reagieren die mit dem Käfig 302 und der Verstellbrücke 319 korrespondierenden Bauteile wesentlich schneller auf Veränderungen, wie Positionsveränderungen einzelner Bauteile. Hierdurch reagiert das gesamte Kegelreibringgetriebe wesentlich schneller auf wechselnde Bedingungen, wie etwa das Ändern der Getriebeübersetzung. In einer besonders bevorzugten Ausführungsform ist der Hauptkörper der Verstellbrücke aus demselben Material hergestellt, wie der Reibring.

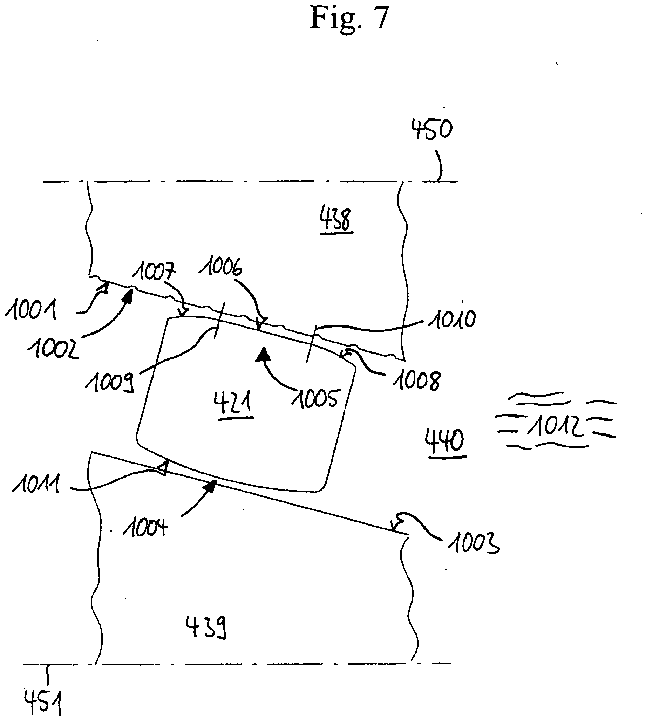

Die in Figur 7 gezeigten Hauptgetriebeglieder bestehen bei dem in dieser Figur dargestellten Ausführungsbeispiel aus einem ersten Reibkegel 438, einem zweiten Reibkegel 439 und einem Reibring 421.

Der erste Reibkegel 438 stellt vorliegend einen Eingangsreibkegel eines Reibkegelgetriebes dar, rotiert um eine Reibkegelachse 450 und weist eine profilierte Mantelfläche 1100 auf, die sich durch umlaufende Rillen 1002 (hier nur exemplarisch beziffert) auszeichnet. Die umlaufenden Rillen 1002 sind vorliegend konzentrisch um die Reibkegelachse 450 in die Mantelfläche 1001 eingearbeitet.

Der zweite Reibkegel 439 rotiert um eine Reibkegelachse 451, stellt einen Ausgangsreibkegel dar und hat eine unprofilierte glatte Mantelfläche 1003. Die beiden Reibkegel 438 und 439 sind um einen Abstand 440 entfernt voneinander gelagert.

Der Reibring 421 ist derart in dem Abstand 440 angeordnet, dass er den ersten Reibkegel 438 umgreift.

Der Reibring 421 hat eine äußere Lauffläche 1004 und eine innere Lauffläche 1005. Die innere Lauffläche 1005 zeichnet sich durch einen Mittenbereich 1006, einen ersten Seitenbereich 1007 und einen zweiten Seitenbereich 1008 aus. Zwischen dem Mittenbereich 1006 und dem ersten Seitenbereich 1007 besteht ein Übergang 1009 mit einem ersten Querkrümmungssprung. Zwischen dem Mittenbereich 1006 und dem zweiten Seitenbereich 1008 besteht ein zweiter Übergang 1010 mit einem weiteren Querkrümmungssprung.

In diesem Ausführungsbeispiel ist der Mittenbereich 1006 geradlinig ausgeführt, dass heißt, er weist keine Krümmung auf. Dagegen sind sowohl der erste Seitenbereich 1007 als auch der zweite Seitenbereich 1008 mit einer Querkrümmung versehen. Die Querkrümmungen der beiden Seitenbereiche 1007, 1008 sind identisch ausgebildet.

Die äußere Lauffläche 1004 weist hingegen keine unterschiedlichen Querkrümmungen auf, sondern hat eine ballige Oberflächengestalt 1011, welche einen stetigen Querkrümmungsverlauf aufweist.

Dadurch dass vorliegend im Bereich der inneren Lauffläche 1004 die seitlichen Bereiche 1007, 1008 eine größere Querkrümmung aufweisen als der Mittenbereich 1006, der in diesem Ausführungsbeispiel keine Querkrümmung besitzt, gelangt zum einen ein Fluid 1012 wesentlich leichter in den Mittenbereich 1006, der in diesem Ausführungsbeispiel die Haupttragoberfläche der Lauffläche 1005 bereitstellt. Zum anderen ist die Gefahr verringert, dass der Reibring 421 im Bereich der Rillen 1002 des Eingangsreibkegels beginnt zu "springen", da ein Übergleiten des Reibrings 421 zwischen den einzelnen Rillen 1002 auf Grund der größeren Querkrümmung in den Seitenbereichen 1007, 1008 wesentlich weicher gelingt.

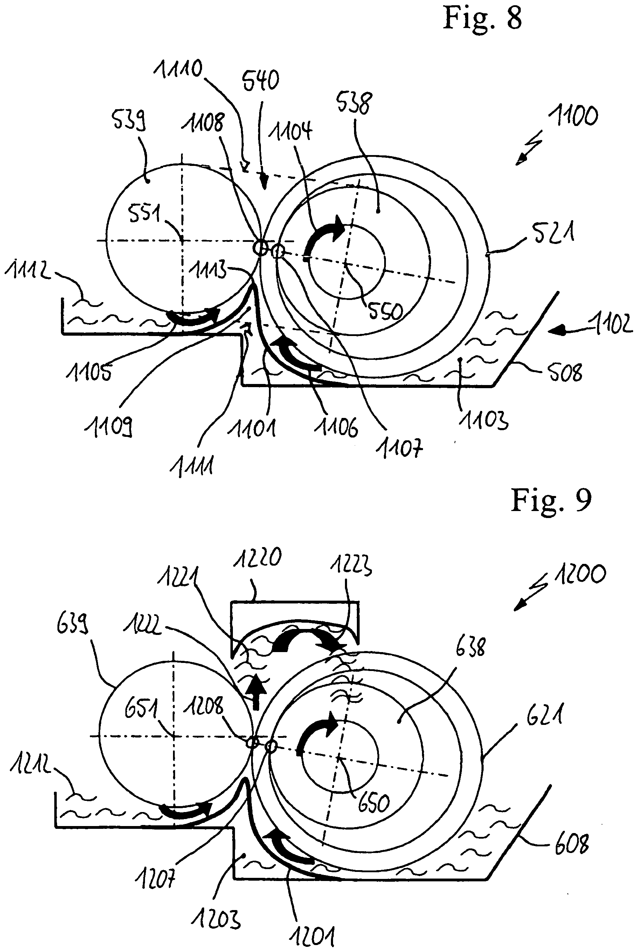

Die in der Figur 8 gezeigten Hauptgetriebeglieder 1100 umfassen einen ersten Reibkegel 538, einen zweiten Reibkegel 539 und einen Reibring 521. Die Hauptgetriebeglieder 1100 sind in einem Gehäuse 508 eines Reibkegelgetriebes (hier nicht näher gezeigt) gelagert. An dem Gehäuse 508 ist eine passive Fluidmittelzufuhr 1101 befestigt. Im unteren Bereich 1102 des Reibkegelgetriebegehäuses 508 ist ein Fluidmittelreservoir 1103 vorgesehen. In diesem Fluidmittelreservoir 1103 ist ein Fluidmittel 1112 bevorratet.

Der erste Reibkegel 538 ist rotierbar um eine erste Reibkegelachse 550 aber fix in dem Gehäuse 508 des Reibkegelgetriebes gelagert. Der erste Reibkegel 538 rotiert gemäß der Rotationsrichtung 1104 um die erste Reibkegelachse 550. Der zweite Reibkegel 539 ist ebenfalls fix aber drehbar an dem Gehäuse 508 des vorliegenden Reibkegelgetriebes gelagert. Der zweite Reibkegel 539 rotiert hierbei gemäß einer zweiten Rotationsrichtung 1105 um eine zweite Reibkegelachse 551.

Die beiden Reibkegel 538, 539 sind derart voneinander beabstandet, dass sich zwischen Ihnen ein Abstand 540 ergibt, in welchem der Reibring 521 verlagerbar angeordnet ist. Der Reibring 521 ist also entlang der Reibkegelachsen 550, 551 bzw. entlang des Abstandes 540 verlagerbar und rotiert in Reibringrotationsrichtung 1106 um den ersten Reibkegel 538 herum.

Zwischen dem ersten Reibkegel 538 und dem Reibring 521 ergibt sich bei rotierenden Hauptgetriebegliedern 1100 ein erster Fluidspalt 1107. Dementsprechend ergibt sich zwischen dem zweiten Reibkegel 539 und dem Reibring 521 bei rotierenden Hauptgetriebegliedern 1100 ein zweiter Fluidmittelspalt 1108.

Um das Fluidmittel 1112 insbesondere in den zweiten Fluidmittelspalt 1108 zu leiten, ist die Fluidmittelzufuhr 1101 derart geformt, dass sie zum einen nahezu der Kontur der Reibkegel 538, 539 folgt und zum anderen bis in einen Volumenraum 1109 hinein reicht, der von den Grenzen der Reibkegel 538, 539 gebildet wird und zwischen den beiden Reibkegeln 538, 539 angeordnet ist.

Hierbei wird der Volumenraum 1109 von den Reibkegeln 538, 539 selbst begrenzt und zum anderen von einer ersten gedachten Begrenzungslinie 1110 und einer zweiten gedachten Begrenzungslinie 1111 begrenzt.

Die Fluidmittelzufuhr 1101 ist bei diesem Ausführungsbeispiel an dem Reibkegelgetriebegehäuse 508 befestigt und als Blechkonstruktion ausgebildet. Diese reicht mit ihrer Spitze 1113 bis nahe an den zweiten Fluidmittelspalt 1108 heran und erstreckt sich über die gesamte Länge der Reibkegel 538, 539. Somit wird das Fluidmittel 1112 mittels der Blechkonstruktion der Fluidmittelzufuhr 1101 besonders effektiv in oder zumindest nahe dem zweiten Fluidmittelspalt 1108 gefördert.

Da es sich bei dem Reibring 521 im Vergleich zu den beiden Reibkegeln 538, 539 um ein eher schmales Bauteil handelt, gelangt das Fluidmittel 1112 mittels der Blechkonstruktion der Fluidmittelzufuhr 1100 vorteilhafter Weise auch bis in den ersten Fluidmittelspalt 1107.

Die in der Figur 9 gezeigten Hauptgetriebeglieder 1200 zeichnen sich ebenfalls durch einen ersten Reibkegel 638, einen zweiten Reibkegel 639 und einen zwischen diesen beiden Reibkegeln 638, 639 korrespondierenden Reibring 621 aus. Die Hauptgetriebeglieder 1200 sind in einem Reibkegelgetriebegehäuse 608 gelagert, wobei der erste Reibkegel 638 um eine erste Reibkegelachse 650 und der zweite Reibkegel 639 um eine zweite Reibkegelachse 651 rotiert. Im Bereich eines Fluidmittelreservoirs 1203 ist ebenfalls eine Fluidmittelzufuhr 1201 als Blechkonstruktion an dem Gehäuse 608 befestigt. Mittels der Fluidmittelzufuhr 1201 wird ein Fluidmittel 1212, wie in dem bereits vorstehend erläuterten Ausführungsbeispiel, an einen ersten Fluidmittelspalt 1207 und an einen zweiten Fluidmittelspalt 1208 geleitet. Oberhalb der Hauptgetriebeglieder 1200 ist eine weitere Fluidmittetzufuhr 1220 vorgesehen. Mittels der weiteren Fluidmittelzufuhr 1220 wird ein Fluidmittel 1221, welches gemäß Strömrichtung 1222 aus den beiden Fluidmittelspalten 1207, 1208 heraus gefördert wird, umgelenkt und gemäß der Zurücklenkrichtung 1223 auf den ersten Reibkegel 638 und den Reibring 621 zurück gelenkt.

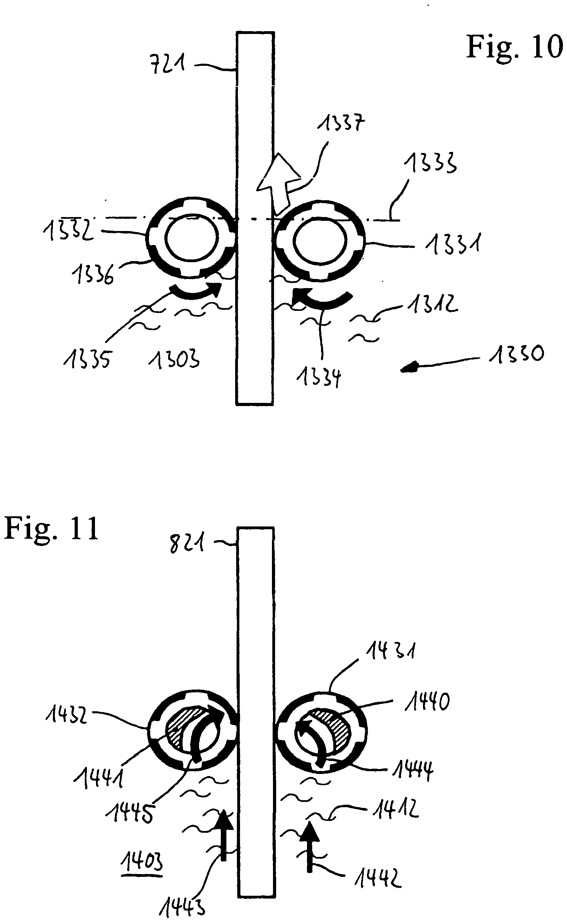

Der in der Figur 10 gezeigte Reibring 721 ist mit seinem unteren Bereich 1330 in einem Fluidmittelreservoir 1303 eingetaucht. Der Reibring 721 steht mit einem ersten Flügelrad 1331 und einem zweiten Flügelrad 1332 in Wirkkontakt. Rotiert der Reibring 721 um die Reibringrotationsachse 1333, bewegen sich die beiden Flügelräder 1331, 1332 gemäß der Flügelraddrehung 1334 und 1335. Hierbei reißen die an den Flügelrädern 1331, 1332 angebrachten Flügel 1336 (hier nur exemplarisch beziffert) das Fluidmittel 1312 mit und schleudern dieses gemäß Schleuderrichtung 1337 auf den Reibring 721. Somit ist eine besonders gute Benetzung des Reibringes 721 mit dem Fluidmittel 1312 erzielt.

Der in der Figur 11 gezeigt Reibring 821 korrespondiert mit einem ersten Flügelrad 1431 und einem zweiten Flügelrad 1432. Das erste Flügelrad 1431 ist vorliegend an einer Umlenkeinrichtung 1440 und das zweite Flügelrad 1432 an der Umlenkeinrichtung 1441 gelagert. Beide Flügelräder 1431, 1432 werden als Fluidmittelbeschleuniger verwendet. Durch Rotation der beiden Flügelräder 1431, 1432 wird Fluidmittel 1412 aus einem Fluidmittelreservoir 1403 gemäß der ersten Beschleunigungsrichtung 1442 und der zweiten Beschleunigungsrichtung 1443 heraus beschleunigt und mittels der ersten Umlenkeinrichtung 1440 und der zweiten Umlenkeinrichtung 1441 gemäß der ersten Umlenkrichtung 1444 und der zweiten Umlenkrichtung 1445 gegen den Reibring 821 umgelenkt. Durch diese Anordnung lässt sich die Benetzung des Reibringes gegenüber der Anordnung nach Figur 10 noch weitere erhöhen.

Die Anordnungen nach Figuren 10 und 11 sind insbesondere in der Lage, die Spalte 1107 und 1207 bei den Ausführungsbeispielen nach Figuren 8 und 9, also die Spalten zwischen Reibring und dem vom Reibring umgebenen Kegel mit Fluid zu versorgen. Dieses kann insbesondere auch indirekt geschehen, indem durch diese Anordnungen die entsprechenden Hauptgetriebeglieder, also der Kegel bzw. der Reibkörper an der jeweiligen Oberfläche ausreichend benetzt werden.

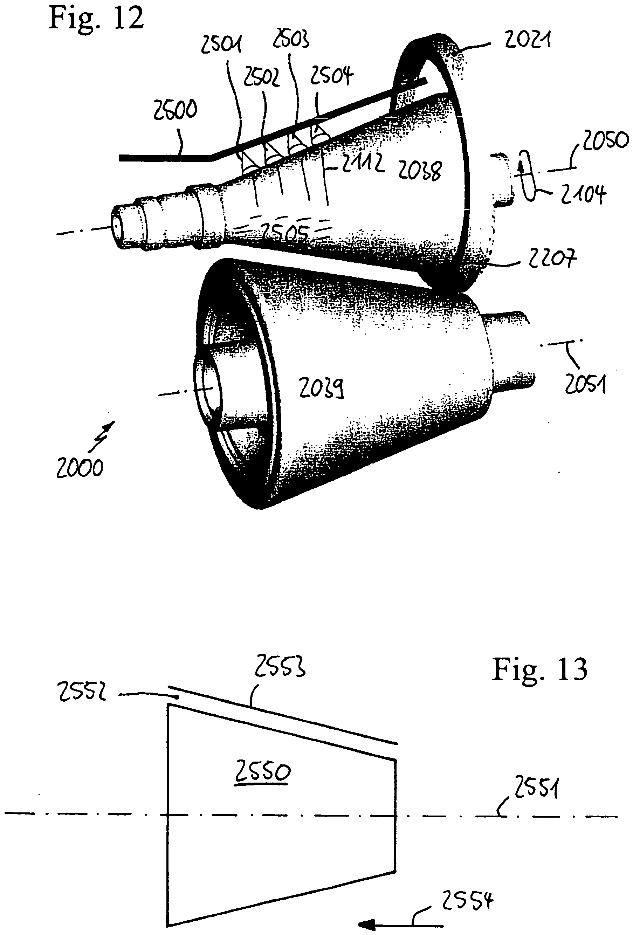

Die in der Figur 12 gezeigten Hauptgetriebeglieder 2000 umfassen einen ersten Reibkegel 2038 als Eingangskegel, einen zweiten Reibkegel 2039 als Ausgangskegel und einen Reibring 2021 als Kontaktglied zwischen den beiden Reibkegeln 2038, 2039. Die Hauptgetriebeglieder 2000 sind in einem Reibkegelgetriebegehäuse (hier nicht gezeigt) gelagert.

Oberhalb des ersten Reibkegels 2038 ist eine Fluidmittelzufuhrleitung 2005 vorgesehen, an welcher Fluidmittelstrahldüsen 2501, 2502, 2503 und 2504 (exemplarisch dargestellt) vorgesehen ist. Die Fluidmittelstrahldüsen 2501 bis 2504 sind in diesem Ausführungsbeispiel derart ausgerichtet, dass aus ihnen austretendes Fluidmittel in einer Zone 2505 des Eingangskegels auftreffen, welche hinter einem Fluidmittelspalt 2207 angeordnet ist. Hierdurch wird eine möglichst effektive Kühlung der Zone 2505 erzielt. Dies ist besonders wichtig, da diese Zone 2505, welche unmittelbar hinter einem Kontaktbereich zwischen dem Eingangskegel 2038 und dem Reibring 2021 liegt.

Vorliegend rotiert der erste Reibkegel 2038 um eine erste Reibkegelachse 2050 mit einer ersten Rotationsrichtung 2104. Entsprechend rotiert der zweite Reibkegel 2039 um eine zweite Reibkegelachse 2051.

Der in der Figur 13 gezeigte Ausgangskegel 2550 rotiert um eine Ausgangskegelachse 2551. Beabstandet um einen Raum 2552 von dem Ausgangskegel 2550 ist eine Hülleinrichtung 2553 angeordnet.

Der Ausgangskegel 2550 und die Hülleinrichtung 2553 bilden gemeinsam eine Fördereinrichtung, mit welcher es möglich ist, ein Fluidmittel gemäß der Förderrichtung 2554 in den Raum 2552. Durch die spezielle Anordnung des Ausgangskegels 2550 und der Hülleinrichtung 2553 des Ausgangskegels 2550 ist eine Fluidmittelfördereinrichtung geschaffen worden, die baulich besonders einfach konstruiert ist.

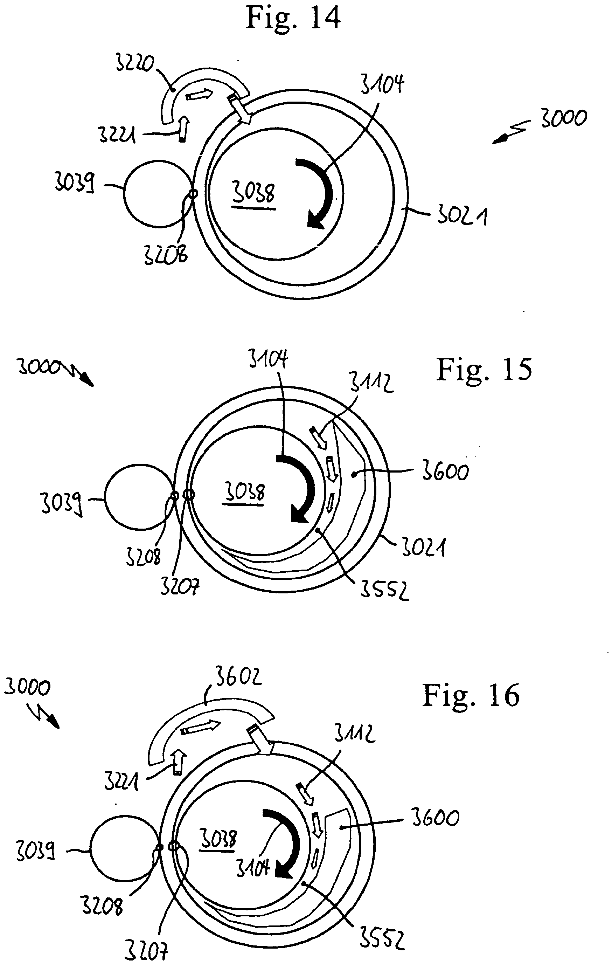

Die in der Figur 14 gezeigten Getriebeglieder 3000 umfassen einen ersten Reibkegel 3038, einen zweiten Reibkegel 3039 und einen Reibring 3021. Wie in der Figur 14 dargestellt, ist oberhalb der Hauptgetriebeglieder 3000 eine Fluidmittelzufuhr 3220 vorgesehen, mit welcher ein Fluidmittel 3221, welches aus einem Fluidmittelspalt 3208 heraus gelangt, wieder zurück in Richtung der Hauptgetriebeglieder 3000 umgelenkt wird. Mittels dieser Fluidmittelzufuhr 3220 wird eine verbesserte Fluidmittelzufuhr der Hauptgetriebeglieder 3000 erzielt.

Bei der Ausführungsform nach Figur 15, in welcher zu den Baugruppen nach Figur 14 identische Baugruppen auch identische beziffert sind, sind die Hauptgetriebeglieder 3000 nicht mit einer derartigen Fluidmittelzufuhr 3220 versehen. Vielmehr ist an den ersten Reibkegeln 3038 ein Fluidmittelleitblech 3600 vorgesehen, wobei das Fluidmittelleitblech 3600 gegenüber dem ersten Reibkegel 3038 derart angeordnet ist, dass zwischen dem Fluidmittelleitblech 3600 und dem ersten Reibkegel 3038 ein Raum 3601 entsteht, in welchem Fluidmittel 3112 aufgrund der Rotation des ersten Reibkörpers 3038 hineingezogen wird.

Um eine verbesserte Fluidmittelzufuhr bzw. Fluidmittelförderung an Hauptgetriebegliedern 3000 zu erzielen, weisen die Hauptgetriebeglieder 3000 nach der Figur 16, in welcher zu den Baugruppen nach Figuren 14 und 15 identische Baugruppen auch identische beziffert sind, sowohl eine Fluidmittelzufuhr 3220 als auch eine Fluidmittelleitfläche 3600 auf. Vorteilhafter Weise wird ein aus dem Fluidmittelspalt 3208 gelangtes Fluidmittel 3112 mittels der Fluidmittelzufuhr 3220 auf den ersten Reibkegel 3038 umgelenkt, wobei das umgelenkte Fluidmittel 3112 mittels der in der ersten Rotationsrichtung 3104 rotierenden Reibkegel 3038 in den Raum 3552 befördert. Hinter dem Raum 3552 gelangt das Fluidmittel 3112 an einen Fluidmittelspalt 3207, der sich zwischen den ersten Reibkegel 3038 und dem Reibring 3021 befindet, befördert.

### Bezugszifferliste:

| | | | |
|---|---|---|---|
| 1 | Führungseinrichtung | 242 | Führungsachsenlagerauge |
| 2 | Käfig | 243 | erste Rolle |
| 3 | Blechkonstruktion | 244 | zweite Rolle |
| 4 | elastische Lagereinrichtung | 245 | Umlenkeinrichtung |
| 5 | zweite elastische Lagereinrichtung | 246 | Kontaktstelle |
| 6 | dritte elastische Lagereinrichtung | 301 | Führungseinrichtung |
| 7 | Bohrungen | 302 | Käfig |
| 8 | Reibringgetriebegehäuse | 308 | Reibringgetriebegehäuse |
| 9 | Querschnittsverjüngung | 311 | Schwenkachse |
| 10 | Anstellhebel | 319 | Verstellbrücke |
| 11 | Schwenkachse | 321 | Reibring |
| 12 | Anstellhebelaufnahmeblech | 322 | erster Rollenhalter |
| 13 | Doppelpfeil | 323 | zweiter Rollenhalter |
| 14 | weitere Bauteilgruppe | 329 | Fläche |
| 15 | U-förmig gebogener Bereich | 338 | erster Reibkegel |
| 16 | erster Schenkel der Blechkonstruktion | 339 | zweiter Reibkegel |
| 17 | zweiter Schenkel der Blechkonstruktion | 340 | Abstand |
| 18 | Führungsachse | 345 | Verstellmotor |
| 19 | Verstellbrücke | 350 | erste Reibkegelachse |
| 20 | Pfeilrichtungen | 351 | zweite Reibkegelachse |
| 21 | Reibring | 354 | erstes Querhaupt |
| 22 | erster Rollenhalter | 355 | zweites Querhaupt |
| 23 | zweiter Rollenhalter | 356 | erste Führungsachse |
| 24 | Reibringachse | 357 | zweite Führungsachse |
| 25 | Drehsicherung | 358 | Zapfen |
| 26 | Drehsicherungszapfen | 359 | Querantrieb |
| 27 | Laufschiene | 421 | Reibring |
| 28 | erste Flächenseite | 438 | erster Reibkegel |
| 29 | Fläche | 439 | zweiter Reibkegel |
| 30 | zweite Flächenseite | 440 | Abstand |
| 101 | Führungseinrichtung | 450 | erste Reibkegelachse |
| 102 | Käfig | 451 | zweite Reibkegelachse |
| 118 | Führungsachsen | 508 | Gehäuse |
| 119 | Verstellbrücke | 521 | Reibring |
| 121 | Reibring | 538 | erster Reibkegel |
| 126 | Drehsicherungszapfen | 539 | zweiter Reibkegel |
| 135 | Lager für die Führungsstange | 540 | Abstand |
| 136 | Führungsstange | 550 | erste Reibkegelachse |
| 137 | oberer Bereich | 551 | zweite Reibkegelachse |
| 138 | erster Reibkegel | 608 | Gehäuse |
| 139 | zweiter Reibkegel | 638 | erster Reibkegel |
| 140 | Abstand | 639 | zweiter Reibkegel |
| 219 | Verstellbrücke | 650 | erste Reibkegelachse |
| 221 | Verstellring | 651 | zweite Reibkegelachse |
| 222 | erster Rollenhalter | 721 | Reibring |
| 223 | zweiter Rollenhalter | 821 | Reibring |
| 226 | Drehsicherungszapfen | 1001 | erste Mantelfläche |
| 237 | oberer Bereich | 1002 | Rillen |
| 241 | unterer Bereich | 1003 | zweite Mantelfläche |
| 1004 | äußere Lauffläche | 1443 | zweite Umlenkrichtung |
| 1005 | innere Lauffläche | 1444 | erste Umlenkrichtung |
| l006 | Mittenbereich | 1445 | zweite Umlenkrichtung |
| 1007 | erster Seitenbereich | 2000 | Hauptgetriebeglied |
| 1008 | zweiter Seitenbereich | 2021 | Reibring |
| 1009 | erster Übergang | 2038 | erster Reibkegel |
| 1010 | zweiter Übergang | 2039 | zweiter Reibkegel |
| 1011 | Querkrümmung | 2051 | Reibkegelachse |
| 1012 | Fluid | 2104 | erste Rotationsrichtung |
| 1100 | Hauptgetriebeglieder | 2500 | Fluidmittelzufuhrleitung |
| 1101 | Fluidmittelzufuhr | 2501 | erste Fluidmittelstrahldüse |
| 1102 | unterer Bereich des Reibkegelgetriebes | 2502 | zweite Fluidmittelstrahldüse |
| 1103 | Fluidmittelreservoir | 2503 | dritte Fluidmittelstrahldüse |
| 1104 | erste Rotationsrichtung | 2504 | vierte Fluidmittelstrahldüse |
| 1105 | zweite Rotationsrichtung | 2207 | erster Fluidmittelspalt |
| 1106 | Reibringrotationsrichtung | 2505 | Zone |
| 1107 | erster Fluidmittelspalt | 2550 | Ausgangskegel |
| 1108 | zweiter Fluidmittelspalt | 2551 | Ausgangskegelachse |
| 1109 | Volumenraum | 2552 | Raum |
| 1110 | erste Begrenzungslinie | 2553 | Hülleinrichtung |
| 1111 | zweite Begrenzungslinie | 2554 | Förderrichtung |
| 1112 | Fluidmittel | 3000 | Getriebeglieder |
| 1113 | Spitze | 3021 | Reibring |
| 1200 | Hauptgetriebeglieder | 3038 | erster Reibkegel |
| 1201 | Fluidmittelzufuhr | 3039 | zweiter Reibkegel |
| 1202 | Fluidmittelreservoir | 3104 | erste Rotationsrichtung |
| 1207 | erster Fluidmittelspalt | 3207 | erster Fluidmittelspalt |
| 1208 | zweiter Fluidmittelspalt | 3208 | zweiter Fluidmittelspalt |
| 1212 | Fluidmittel | 3220 | Fluidmittelzufuhr |
| 1220 | weitere Fluidmittelzufuhr | 3221 | Fluidmittel |
| 1221 | Fluidmittel | 3600 | Fluidmittelleitblech |
| 1222 | Strömrichtung | 3552 | Raum |
| 1223 | Zurücklenkrichtung | 3602 | Fluidmittelzufuhr |
| 1303 | Fluidmittelreservoir | | |
| 1312 | Fluidmittel | | |
| 1330 | unterer Bereich | | |
| 1331 | erstes Flügelrad | | |
| 1332 | zweites Flügelrad | | |
| 1333 | Reibringrotationsachse | | |
| 1334 | Umlaufrichtung des ersten Flügelrades | | |
| 1335 | Umlaufrichtung des zweiten Flügelrades | | |
| 1336 | Flügel | | |
| 1337 | Schleuderrichtung | | |
| 1403 | Fluidmittelreservoir | | |
| 1412 | Fluidmittel | | |
| 1431 | erstes Flügelrad | | |
| 1432 | zweites Flügelrad | | |
| 1440 | erste Umlenkeinrichtung | | |
| 1441 | zweite Umlenkeinrichtung | | |
| | | | |

## Patentansprüche

1. Reibkegelgetriebe mit einem Gehäuse (8; 508; 608), mit Hauptgetriebegliedern, welche einen ersten Reibkegel (138; 338; 438; 538; 638; 2038; 2550; 3038), einen zweiten Reibkegel (139; 339; 439; 539; 639; 2039; 2550; 3039) und einen Reibkörper umfassen, und mit Nebengetriebegliedern, bei welchem die beiden Reibkegel (138, 139; 338, 339; 438, 439; 538, 539; 638, 639; 2038, 2039; 2550; 3038, 3039) mittels des Reibkörpers miteinander korrespondieren und um einen fixen Abstand (140; 340; 440; 540) voneinander beabstandet angeordnet sind und bei welchem der Reibkörper in dem Abstand (140; 340; 440; 540) verlagerbar angeordnet ist, **gekennzeichnet durch** eine gehäusefest an dem Reibkegelgetriebe angeordnete passive Fluidmittelzufuhr (1101; 1201; 1220; 3220; 3602) für die Hauptgetriebeglieder, die eine Gestalt aufweist, deren Kontur wenigstens einem der Hauptgetriebeglieder folgt, wobei ein Reibkegel (638; 2550; 3038) eine Hülleinrichtung (1201; 2553; 3600) aufweist, welche den Reibkegel (638; 2550; 3038) zumindest teilweise umgibt.

2. Reibkegelgetriebe nach Anspruch 1, **dadurch gekennzeichnet, dass** das Gehäuse (8; 508; 608) die passive Fluidmittelzufuhr (1101; 1201; 1220; 3220; 3602) aufweist.

3. Reibkegelgetriebe nach einem der Ansprüche 1 bis 2, **dadurch gekennzeichnet, dass** die passive Fluidmittelzufuhr (1101; 1201; 1220; 3220; 3602) unmittelbar gehäusefest an dem Reibkegelgetriebe angeordnet ist.

4. Reibkegelgetriebe nach einem der vorhergehenden Ansprüche, **dadurch gekennzeichnet, dass** zumindest bei rotierenden Hauptgetriebegliedern zwischen dem ersten Reibkegel (138; 338; 438; 538; 638; 2038; 2550; 3038) und dem Reibkörper ein erster Fluidmittelspalt (1107; 1207; 2207; 3207) und zwischen dem zweiten Reibkegel (139; 339; 439; 539; 639; 2039; 2550; 3039) und dem Reibkörper ein zweiter Fluidmittelspalt (1108; 1208; 3208) vorhanden ist und die passive Fluidmittelzufuhr (1101; 1201) in Rotationsrichtung eines Hauptgetriebegliedes gesehen vor einem Fluidmittelspalt (1107, 1108; 1207, 1208; 2207; 3207, 3208) angeordnet ist.

5. Reibkegelgetriebe nach einem der vorhergehenden Ansprüche, **dadurch gekennzeichnet, dass** zumindest bei rotierenden Hauptgetriebegliedern zwischen dem ersten Reibkegel (138; 338; 438; 538; 638; 2038; 2550; 3038) und dem Reibkörper ein erster Fluidmittelspalt (1107; 1207; 2207; 3207) und zwischen dem zweiten Reibkegel (139; 339; 439; 539; 639; 2039; 2550; 3039) und dem Reibkörper ein zweiter Fluidmittelspalt (1108; 1208; 3208) vorhanden ist und die passive Fluidmittelzufuhr (1220; 3220; 3602) in Rotationsrichtung gesehen eines Hauptgetriebegliedes hinter einem Hluidmittelspalt (1107, 1108; 1207, 1208; 2207; 3207, 3208) angeordnet ist.

6. Reibkegelgetriebe nach einem der vorhergehenden Ansprüche, **dadurch gekennzeichnet, dass** die passive Fluidmittelzufuhr (1101; 1201), insbesondere eine Mantelfläche der passiven Fluidmittelzufuhr, bis in ein Raumvolumen hinein reicht, welches von den Grenzen der beiden Reibkegel (138, 139; 338, 339; 438, 439; 538, 539; 638, 639; 2038, 2039; 2550; 3038, 3039) gebildet und zwischen den beiden Reibkegeln (138, 139; 338, 339; 438, 439; 538, 539; 638, 639; 2038, 2039; 2550; 3038, 3039) angeordnet ist.

7. Reibkegelgetriebe nach einem der vorhergehenden Ansprüche, **dadurch gekennzeichnet, dass** ein Ausgangskegel (2550) des Reibkegelgetriebes, eine Hülleinrichtung (2553; 3600) aufweist, welche den Reibkegel (2550; 3038) zumindest teilweise umgibt.

8. Reibkegelgetriebe nach einem der vorhergehenden Ansprüche, **dadurch gekennzeichnet, dass** eine Hülleinrichtung (2553; 3600) eines Reibkegels (2550; 3038) eine Fluidmittelleitfläche aufweist.

9. Reibkegelgetriebe nach Anspruch 8, **dadurch gekennzeichnet, dass** die Fluidmittelleitfläche an einer einem Reibkegel zugewandten Seite eine konturierte Oberfläche aufweist.

10. Reibkegelgetriebe nach Anspruch 8, **dadurch gekennzeichnet, dass** die Fluidmittelleitfläche konkav ausgebildet ist.

11. Reibkegelgetriebe nach Anspruch 8, **dadurch gekennzeichnet, dass** die Fluidmittelleitfläche der Kontur des Reibkegels folgt und sich mehr als zwei Drittel der Reibkegellänge entlang des Reibkegels erstreckt.

12. Reibkegelgetriebe nach einem der vorhergehenden Ansprüche, **gekennzeichnet durch** eine Fluidmittelfördereinrichtung mit einer rotierenden Welle und einer die rotierenden Welle zumindest teilweise umgebenden Wandung, wobei die rotierende Welle einen Reibkegel (2550) und die Wandung eine Fluidmittelleitfläche einer Hülleinrichtung (2553) eines Reibkegels (2550) umfasst.

## Claims

1. A friction cone-type transmission having a housing (8; 508; 608), having main transmission elements, which comprise a first friction cone (138; 338; 438; 538; 638; 2038; 2550; 3038), a second friction cone (139; 339; 439; 539; 639; 2039; 2550; 3039) and a friction body, and having secondary transmission elements, in which the two friction cones (138, 139; 338, 339; 438, 439; 538, 539; 638, 639; 2038, 2039; 2550; 3038, 3039) correspond with one another by means of the friction body and are arranged spaced apart from one another by a fixed spacing (140; 340; 440; 540) and in which the friction body is arranged so it is displaceable in the sparing (140; 340; 440; 540), **characterized by** a passive fluid means supply (1101; 1201; 1220; 3220; 3502), which is arranged fixed on the housing on the friction cone-type transmission, for the main transmission elements, which has a form whose contour follows at least one of the main transmission elements, one friction cone (638; 2550; 3038) halving an envelope device (1201; 2553; 3600) which at least partially encloses the friction cone (638, 2550; 3038).

2. The friction cone-type transmission according to Claim 1, **characterized in that** the housing (8; 508; 608) has the passive fluid means supply (1101; 1201; 1220; 3220; 3602).

3. The friction cone-type transmission according to one of Claims 1 to 2, **characterized in that** the passive fluid means supply (1101; 1201; 1220; 3220; 3602) is arranged directly fixed on the housing on the friction cone-type transmission.

4. The friction cone-type transmission according to one of the preceding claims, **characterized in that**, at least in the case of rotating main transmission elements, a first fluid means gap (1107; 1207; 2207; 3207) is present between the first friction cone (138; 338; 438; 538; 638; 2038; 2550; 3038) and the friction body and a second fluid means gap (1108; 1208; 3208) is present between the second friction cone (139; 339; 439; 539; 639; 2039; 2550; 3039) and the friction body, and the passive fluid means supply (1101; 1201) is arranged in front of a fluid means gap (1107, 1108; 1207, 1208; 2207; 3207, 3208) viewed in the rotational directrion of a main transmission element.

5. The friction cone-type trransmission according to one of the preceding claims, **characterized in that**, at least in the case of rotating main transmission elements, a first fluid means gap (1107; 1207; 2207; 3207) is present between the first friction cone (138; 338; 438; 538; 638; 2038; 2550; 3038) and the friction body and a second fluid means gap (1108; 1208; 3208) is present between the second friction cone (139; 339; 439; 539; 639; 2039; 2550; 3039) and the friction body, and the passive fluid means supply (1101; 1201) is arranged behind a fluid means gap (1107, 1108; 1207, 1208; 2207; 3207, 3208) viewed in the rotational direction of a main transmission element.

6. The friction cone-type transmission according to one of the preceding claims, **characterized in that** the passive fluid means supply (1101; 1201), in particular a lateral surface of the passive fluid means supply, extends up into a spatial volume which is formed by the boundaries of the two friction cones (138, 139; 338, 339; 438, 439; 538, 539; 638, 639; 2038, 2039; 2550; 3038, 3039) and is arranged between the two friction cones (138, 139; 338, 339; 438, 439; 538, 539; 638, 639; 2038, 2039; 2550; 3038, 3039).

7. The friction cone-type transmission according to one of the preceding claims, **characterized in that** an output cone (2550) of the friction cone-type transmission has an envelope device (2553; 3600), which at least partially encloses the friction cone (2550; 3038).

8. The friction cone-type transmission according to one of the preceding claims, **characterized in that** an envelope device (2553; 3600) of a friction cone (2550; 3038) has a fluid means guiding surface.

9. The friction cone-type transmission according to Claim 8, **characterized in that** the fluid means guiding surface has a contoured surface on a side facing toward a friction cone.

10. The friction cone-type transmission according to Claim 8, **characterized in that** the fluid means guiding surface is implemented as concave.

11. The friction cone-type transmission according to Claim 8, **characterized in that** the fluid means guiding surface follows the contour of the friction cone and extends along the friction cone over more than two thirds of the friction cone length.

12. The friction cone-type transmission according to one of the preceding claims, **characterized by** a fluid means conveyor device having a rotating shaft and a wall which at least partially encloses the rotating shaft, the rotating shaft comprising a friction cone (2550) and the wall comprising a fluid means guiding surface of an envelope device (2553) of a friction cone (2550).

## Revendications

1. Transmission à cônes de friction comprenant une transmission (8 ; 508 ; 608) avec des éléments de transmission principale, qui comprennent un premier cône de friction (138 ; 338 ; 438 ; 538 ; 638 ; 2038 ; 2550 ; 3038), un second cône de friction (139 ; 339 ; 439 ;. 539 ; 639 ; 2039 ; 2550 ; 3039) et un corps de friction, et des éléments de transmission secondaire, sur laquelle les deux cônes de friction (138, 139 ; 338, 339 ; 438, 439 ; 538, 539 ; 638, 639 ; 2038, 2039 ; 2550 ; 3038, 3039) correspondant les uns aux autres au moyen du corps de friction et étant disposés espacés les uns des autres d'un espace fixe (140 ; 340 ; 440 ; 540) et sur laquelle le corps de friction est disposé de façon déplaçable à la distance (140 ; 340 ; 440 ; 540), **caractérisée par** une arrivée d'agent fluidique (1101 ; 1201 ; 1220 ; 3220 ; 3602) passive, disposée de façon solidaire du boîtier sur la transmission à cônes de friction pour les éléments de transmission principale, qui présente une forme dont le contour suit au moins l'un des éléments de transmission principale, un cône de friction (638 ; 2550 ; 3038) présentant un dispositif enveloppant (1201 ; 2553 ; 3600) qui entoure au moins partiellement le cône de friction (638 ; 2550 ; 3038).

2. Transmission à cônes de friction selon la revendication 1, **caractérisée en ce que** le boîtier (8 ; 508 ; 608) présente l'arrivée passive d'agent fluidique (1101 ; 1201 ; 1220 ; 1220 ; 3220 ; 3602).

3. Transmission à cônes de friction selon l'une des revendications 1 à 2, **caractérisée en ce que** l'arrivée passive d'agent fluidique (1101 ; 1201 ; 1220 ; 3220 ; 3602) est disposée de façon directement solidaire du boîtier sur la transmission à cônes de friction.

4. Transmission à cônes de friction selon l'une des revendications précédentes, **caractérisée en ce que**, au moins dans le cas d'éléments rotatifs de transmission principale, une première fente d'agent fluidique (1107 ; 1207 ; 2207 ; 3207) est présente entre le premier cône de friction (138 ; 338 ; 438 ; 538 ; 638 ; 2038 ; 2550 ; 3038) et le corps de friction et une seconde fente d'agent fluidique (1108 ; 1208 ; 3208) est présente entre le second cône de friction (139 ; 339 ; 439 ; 539 ; 639 ; 2039 ; 2550 ; 3039) et le corps de friction et l'arrivée passive d'agent fluidique (1101 ; 1201) étant disposée en amont d'une fente d'agent fluidique (1107, 1108 ; 1207, 1208 ; 2207 ; 3207, 3208), vu dans le sens de rotation d'un élément de transmission principale.

5. Transmission à cônes de friction selon l'une des revendications précédentes, **caractérisée en ce que**, au moins dans le cas d'éléments rotatifs de transmission principale, une première fente d'agent fluidique (1107 ; 1207 ; 2207 ; 3207)est présente entre le premier cône de friction (138 ; 338 ; 438 ; 538 ; 638 ; 2038 ; 2550 ; 3038) et le corps de friction et une seconde fente d'agent fluidique (1108 ; 1208 ; 3208) est présente entre le second cône de friction (139 ; 339 ; 439 ; 539 ; 639 ; 2039 ; 2550 ; 3039) et le corps de friction et l'arrivée passive d'agent fluidique (1220 ; 3220 ; 3602) est disposée en aval d'une fente d'agent fluidique (1107, 1108 ; 1207, 1208 ; 2207 ; 3207, 3208), vu dans le sens de rotation d'un élément de transmission principale.

6. Transmission à cônes de friction selon l'une des revendications précédentes, **caractérisée en ce que** l'arrivée passive d'agent fluidique (1101 ; 1201), en particulier une surface d'enveloppe de l'arrivée passive d'agent fluidique, va jusqu'à l'intérieur d'un volume d'espace qui est formé par les limites des deux cônes de friction (138, 139 ; 338, 339 ; 438, 439 ; 538, 539 ; 638; 639 ; 2038, 2039 ; 2550 ; 3038, 3039) et est disposé entre les deux cônes de friction (138, 139 ; 338, 339 ; 438, 439 ; 538, 539 ; 638, 639 ; 2038, 2039 ; 3038, 3039).

7. Transmission à cônes de friction selon l'une des revendications précédentes, **caractérisée en ce qu'**un cône de sortie (2550) de la transmission à cônes de friction présente un dispositif enveloppant (2553 ; 3600) qui entoure au moins partiellement le cône de friction (2550 ; 3038).

8. Transmission à cônes de friction selon l'une des revendications précédentes, **caractérisée en ce qu'**un dispositif enveloppant (2553 ; 3600) d'un cône de friction (2550 ; 3038) présente une surface directrice d'agent fluidique.

9. Transmission à cônes de friction selon la revendication 8, **caractérisée en ce que** la surface de guidage d'agent fluidique présente une surface profilée sur un côté associé à un cône de friction.

10. Transmission à cônes de friction selon la revendication 8, **caractérisée en ce que** la surface de guidage d'agent fluidique est conçue concave.

11. Transmission à cônes de friction selon la revendication 8, **caractérisée en ce que** la surface de guidage d'agent fluidique suit le contour du cône de friction et plus de deux tiers de la longueur du cône de friction s'étendent le long du cône de friction.

12. Transmission à cônes de friction selon l'une quelconque des revendications précédentes, **caractérisée par** un dispositif de transport d'agent fluidique avec un arbre rotatif et une paroi entourant au moins partiellement l'arbre rotatif, l'arbre rotatif comprenant un cône de friction (2550) et la paroi une surface de guidage d'agent fluidique d'un dispositif enveloppant (2553) d'un cône de friction (2550).
